# NEUE EUROPÄISCHE PATENTSCHRIFT

(11) **EP 1 106 438 B2**
(45) Veröffentlichungstag und Bekanntmachung des Hinweises auf die Entscheidung über den Einspruch: **09.06.2010**
(45) Hinweis auf die Patenterteilung: 06.09.2006
(21) Anmeldenummer: 00125563.7
(22) Anmeldetag: 22.11.2000
(51) Int. Cl.: B60R 11/02, H04R 1/02, B29C 45/00, B29C 45/16

(54) **Anordnung eines Halters für einen Lautsprecher in einem Kraftfahrzeug**
Arrangement of a support for a loudspeaker mounted in a vehicle
Arrangement d'un support pour haut-parleur dans un véhicule

(30) Priorität: 01.12.1999 DE 19957938
(43) Veröffentlichungstag der Anmeldung: 13.06.2001
(73) Patentinhaber: Schefenacker Vision Systems Germany GmbH, 73730 Esslingen (DE)
(72) Erfinder: Novitschitsch, Peter, 73779 Deizisau (DE)
(74) Vertreter: Kohl, Karl-Heinz

(56) Entgegenhaltungen:
- EP-A- 0 552 040
- EP-B1- 1 059 829
- DE-A- 3 424 434
- DE-A- 19 752 786
- DE-A1- 3 841 946
- DE-A1- 4 111 748
- FR-A- 2 633 568
- US-A- 5 532 437
- US-A- 5 739 481

## Beschreibung

Die Erfindung betrifft einen Anordnung eines Halters für einen Lautsprecher zum Einbau in Kraftfahrzeuge nach dem Oberbegriff des Anspruches 1.

Es ist bekannt, Lautsprecher in Kraftfahrzeugen beispielsweise in der Kraftfahrzeugtür einzubauen. Als Halter für den Lautsprecher dient der umlaufende Rand des Lautsprecherkorbes, der in einen Einbauraum der Türverkleidung eingebaut und über eine Dichtung gegenüber dem Rand der Türverkleidung abgedichtet wird. Beim Einbau des Lautsprechers ist große Sorgfalt nötig, um ihn nicht zu beschädigen. Außerdem muß der umlaufende Rand des Lautsprechers umständlich gegenüber dem Rand der Einbauöffnung der Türverkleidung abgedichtet werden.

Bei der gattungsgemäßen Anordnung (US-A 5 532 437) weist der Halter eine Einbauöffnung für den Lautsprecher auf, der mit einem Flansch unter Zwischenlage eines Dichtringes auf einem Flansch des Halters aufliegt. Der Dichtring wird zwischen den beiden Flanschen gequetscht.

Bei einem anderen bekannten Halter (DE-A 34 24 434) für einen Lautsprecher wird ein ringförmiger Dichtflansch in der Einbaulage axial vorgespannt.

Der Erfindung liegt die Aufgabe zugrunde, die gattungsgemäße Anordnung so auszubilden, daß der Lautsprecher problemlos und einwandfrei in den entsprechenden Einbauraum des Kraftfahrzeuges eingebaut werden kann.

Diese Aufgabe wird bei der gattungsgemäßen Anordnung erfindungsgemäß mit den kennzeichnenden Merkmalen des Anspruches 1 gelöst.

Die erfindungsgemäße Anordnung hat die Aufnahme, die den Lautsprecher aufnimmt. Beim Einbau ist der Lautsprecher durch die Aufnahme einwandfrei gegen Beschädigung geschützt. Die Aufnahme liegt mit der Auflage am kraftfahrzeugseitigen Teil an, an dem der erfindungsgemäße Halter einfach befestigt werden kann. Die Dichtung sorgt dafür, daß keine Feuchtigkeit eindringen kann. Außerdem sorgt sie für die Schallabdichtung. Die Dichtlippe liegt in der Einbaulage unter elastischer Verformung an der Seitenwand des Einbauraumes an. Auf diese Weise wird eine zuverlässige Abdichtung erzielt, die einen akustischen Kurzschluß verhindert.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigt:
- Fig. 1: in Draufsicht einen erfindungsgemäßen Lautsprecherhalter mit eingebautem Lautsprecher,
- Fig. 2: einen Schnitt längs der Linie II-II in Fig. 1,
- Fig. 3: in perspektivischer Darstellung den erfindungsgemäßen Lautsprecher gemäß Fig. 1 mit eingebautem Lautsprecher

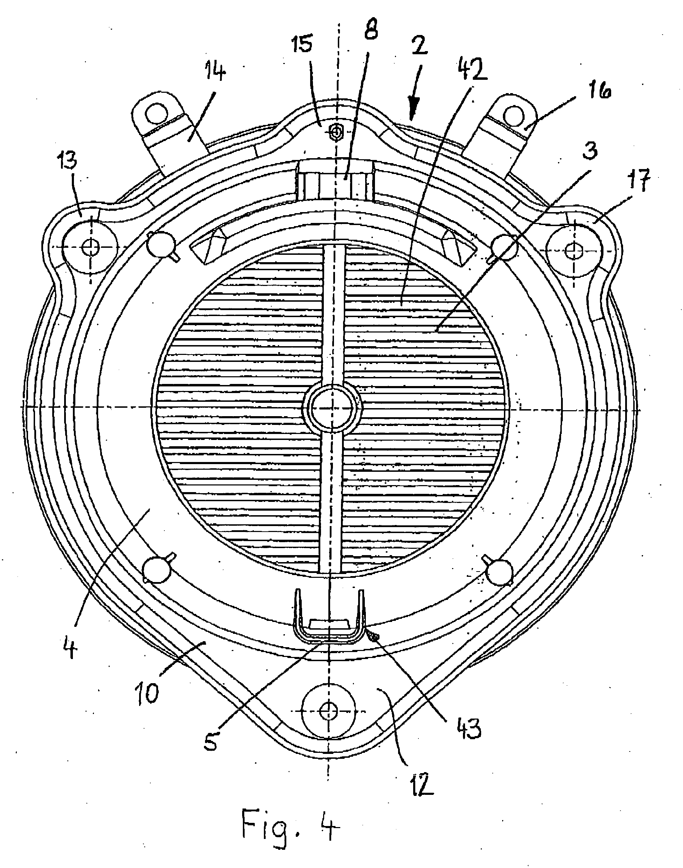

- Fig. 4: eine Unteransicht des erfindungsgemäßen Lautsprecherhalters.

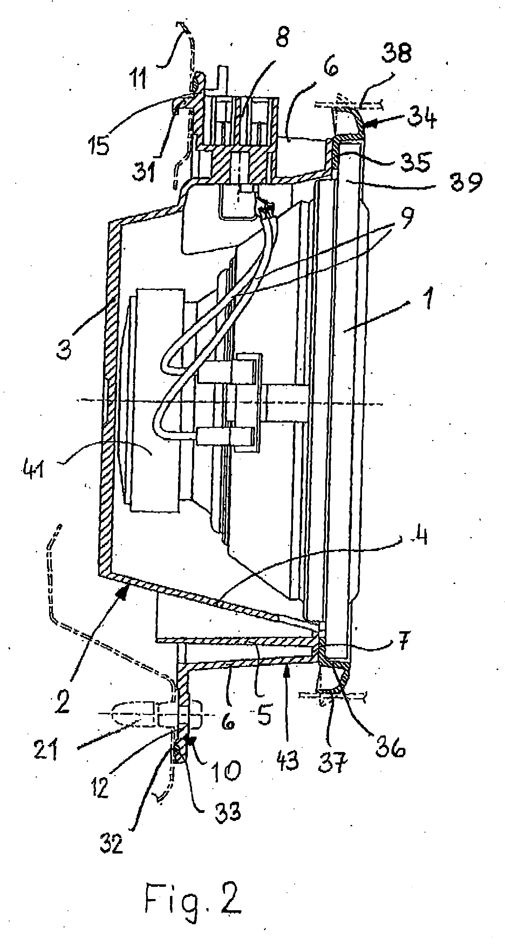

Mit dem Lautsprecherhalter bzw. Lautsprecheradapter wird ein Lautsprecher 1 (Fig. 2) in einem Kraftfahrzeug eingebaut, beispielsweise in die Fahrzeugtür, auf der Heckablage oder in sonstigen Bauräumen des Kraftfahrzeuges. Der Lautsprecherhalter hat einen Aufnahmekorb 2 für den Lautsprecher 1. Der Aufnahmekorb 2 hat einen Boden 3, der eben und kreisförmig ausgebildet sein kann. Er ist vorteilhaft dikker als die konische Seitenwand 4 des Aufnahmekorbes 2 und kann Durchbrechungen 42, beispielsweise Schlitze, aufweisen. Der Aufnahmekorb 2 erweitert sich vom Boden 3 aus. Es ist auch möglich, den Aufnahmekorb ohne Boden auszubilden.

Wie Fig. 2 zeigt, ist im inneren Bereich des Aufnahmekorbes 2, bezogen auf die Einbaulage, eine Wand 5 vorgesehen, die mit Abstand vom Boden 3 des Aufnahmekorbes 2 endet. Sie ist die untere Fläche eines Wasserablaufes 43, der sich von einem Rand 7 des Aufnahmekorbes 2 aus erstreckt. Die Wand 5 ist von einer konischen Seitenwand 6 umgeben, die kürzer als die Wand 5 ist und sich in Richtung auf den Boden 3 des Aufnahmekorbes 2 konisch erweitert (Fig. 2).

Sämtliche drei Wände 4 bis 6 schließen an den umlaufenden, ebenen Rand 7 an, der beispielsweise in einer parallel zum Boden 3 des Aufnahmekorbes 2 liegenden Ebene bzw. senkrecht zur Achse des Aufnahmekorbes 2 verläuft. Je nach Einbausituation kann der Rand 7 auch schräg zur Achse des Aufnahmekorbes 2 verlaufen. Der Aufnahmekorb 2 mit dem Boden 3, den Wänden 4 bis 6 und dem Rand 7 ist vorteilhaft einstückig ausgebildet. Diese Teile werden vorteilhaft aus einem harten Kunststoff, wie beispielsweise Polykarbonat mit Glasfasern, hergestellt. Als Material für diese Teile 2 bis 7 kann auch Polypropylen, Polyacryl oder ABS verwendet werden.

Dadurch hat der Aufnahmekorb 2 eine hohe Festigkeit und schützt darum den in ihn eingesetzten Lautsprecher 1 optimal.

An der Außenseite des Aufnahmekorbes 2 befindet sich ein Steckanschluß 8 für elektrische Zuleitungen zum Lautsprecher 1. Vom Lautsprecher 1 aus führen Leitungen 9 (Fig. 2) zum Steckanschluß 8, die innerhalb des Aufnahmekorbes 2 an den Steckanschluß 8 in geeigneter Weise angeschlossen sind.

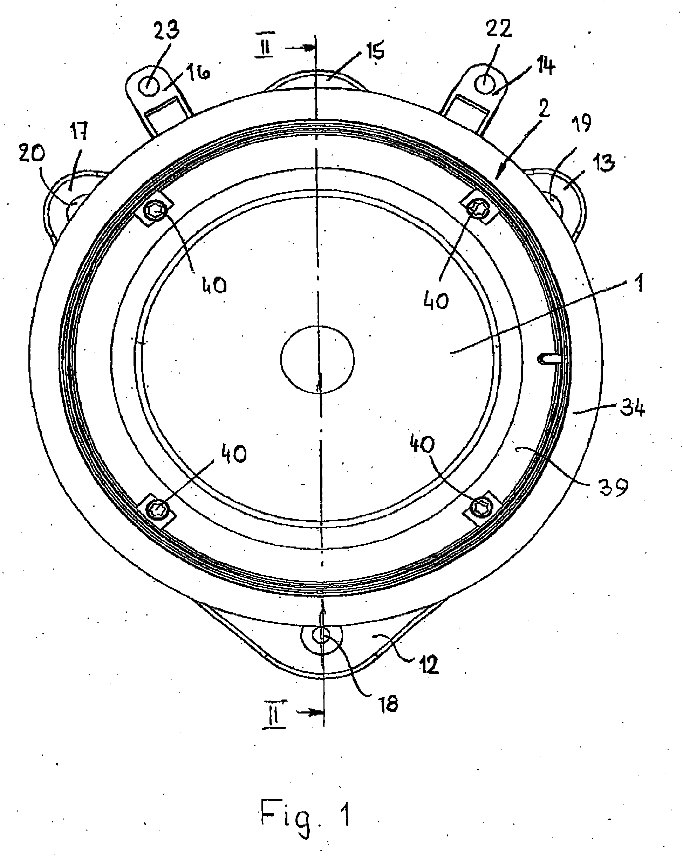

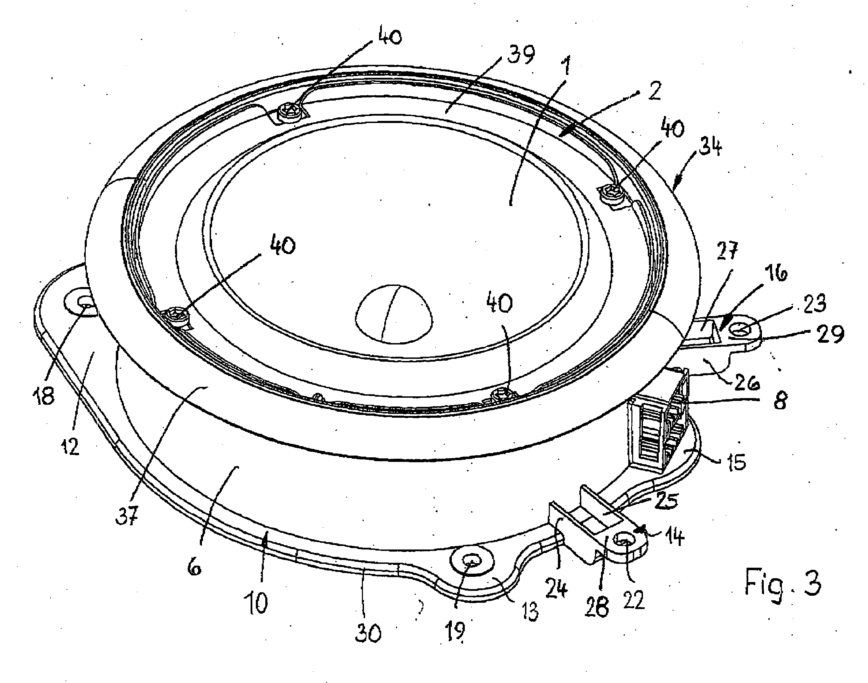

Von der äußeren Seitenwand 6 steht ein umlaufender Rand 10 ab, mit dem der Lautsprecherhalter auf einem Karosserieteil 11 (Fig. 2) des Kraftfahrzeuges in der Einbaulage aufliegt. Das Karosserieteil 11 ist im Ausführungsbeispiel das Türinnenblech, auf dem der Rand 10 des Lautsprecherhalters aufliegt. Der Rand 10 ist, wie die Fig. 1 und 3 zeigen, über seinen Umfang mit vorstehenden Laschen 12, 13 und 17 versehen. Der umlaufende Rand 10 kann parallel zum Boden 3 des Aufnahmekorbes 2 im Bereich zwischen dem Boden 3 und dem oberen Rand 7 liegen. Die Laschen 12, 13 und 17 sind in Draufsicht teilkreisförmig ausgebildet und weisen Durchtrittsöffnungen 18 bis 20 für Befestigungselemente 21 (Fig. 2) auf, mit denen der Lautsprecherhalter am Karosserieteil 11 befestigt wird. Weitere Laschen 14 und 16 stehen radial weiter nach außen vor als die benachbarten teilkreisförmigen Laschen 13, 15, 17 und sind ebenfalls mit Durchtrittsöffnungen 22, 23 für Befestigungselemente, zum Beispiel für Kabel, versehen. Je nach Einbauort kann die Anordnung und Ausbildung der Laschen 12 bis 17 unterschiedlich gewählt werden. Die Laschen 12, 13 und 17 liegen in einer Ebene mit dem umlaufenden Rand 10. Die Laschen 14 bis 16 sind, wie Fig. 3 zeigt, im wesentlichen U-förmig ausgebildet und haben zueinander parallele Schenkel 24, 25 und 26, 27, die senkrecht auf dem Rand 10 stehen und an die Seitenwand 6 anschließen. Am freien Ende sind die Schenkel 24, 25; 26, 27 durch einen horizontalen Steg 28, 29 miteinander verbunden, in dem sich die Durchtrittsöffnung 22, 23 befindet. Die Schenkel 24, 25; 26, 27 verlaufen, wie Fig. 3 zeigt, über die Umfangsseite 30 des Randes 10, so daß die Schenkel in ihrem über den Rand 10 überstehenden Bereich höher sind als in ihrem auf dem Rand 10 aufliegenden Bereich.

Sämtliche Laschen 12 bis 17 sind einstückig mit dem Aufnahmekorb 2 ausgebildet. Auch das Gehäuse des Steckanschlusses 8 ist vorteilhaft einstückig mit dem Aufnahmekorb 2 hergestellt.

Wie sich aus Fig. 2 ergibt, können vom Rand 10 des Aufnahmekorbes 2 auf der vom oberen Rand 7 abgewandten Seite Haken 31 abstehen, die durch entsprechende Öffnungen im Karosserieteil 11 ragen und als Lösesicherung und als Einbauhilfe bzw. Zentrierhilfe für den Aufnahmekorb 2 dienen.

Der Lautsprecherhalter liegt mit dem umlaufenden Rand 10 seines Aufnahmekorbes 3 unter Zwischenlage wenigstens einer Dichtung 32 auf dem Karosserieteil 11 auf. Die Dichtung 32 verläuft vorteilhaft über den Umfang des Randes 10 und wird vorteilhaft geschäumt. Der Rand 10 ist auf seiner dem Karosserieteil 11 zugewandten Seite zur Aufnahme der Dichtung 32 mit einer entsprechenden Vertiefung 33 versehen, die vorteilhaft teilkreisförmigen Querschnitt hat.

Auf dem Rand 7 wird eine umlaufende Dichtung 34 aufgebracht, die eine Doppelfunktion hat. Sie verhindert zum einen den Eintritt von Feuchtigkeit. Zum anderen dient sie als Schallabdichtung für den Lautsprecher 1.

Die Dichtung 34 besteht vorteilhaft aus einem weichen Kunststoff, zum Beispiel aus TPE. Die Dichtung 34 hat einen Ringteil 35, mit dem sie flächig auf dem ebenen Rand 7 aufliegt. Der Ringteil 35 geht am radial äußeren Rand in einen Konusteil 36 über, der sich konisch nach außen erweitert und am freien Ende in eine Dichtlippe 37 übergeht, die sich vom freien Ende des Konusteiles 36 aus radial nach außen erstreckt. Die Dichtlippe 37 ist, wie Fig. 2 zeigt, im Querschnitt teilkreisförmig ausgebildet und erstreckt sich vom Konusteil 36 aus schräg in Richtung auf den Auflagerand 10 des Aufnahmekorbes 3. In Fig. 2 ist durch gestrichelte Linien die unverformte Lage der Dichtlippe 37 dargestellt, wenn der Lautsprecherhalter nicht eingebaut ist. Die Dichtlippe 37 und auch der Konusteil 36 ragen radial über den Rand 7 des Aufnahmekorbes. In der Einbaulage liegt die Dichtlippe 37 unter elastischer Verformung an der Innenseite einer Türverkleidung 38 an. Anstelle der Türverkleidung 38 kann, je nach Einbauort des Lautsprecherhalters, auch jede andere seitliche Begrenzung vorgesehen sein, an welcher die Dichtlippe 37 der Dichtung 34 unter elastischer Verformung anliegt. Auf diese Weise wird eine zuverlässige Abdichtung erzielt, die einen akustischen Kurzschluß verhindert.

Der Lautsprecher 1 liegt mit einem umlaufenden Ringflansch 39 auf dem Ringteil 35 der Dichtung 34 auf. Da die Dichtung 34 den konisch nach außen sich erweiternden Wandteil 36 hat, läßt sich der Lautsprecher 1 einfach in den Aufnahmekorb 2 einsetzen. Der Ringflansch 39 des Lautsprechers 1 wird in bekannter Weise mit Schrauben 40 auf dem Rand 7 unter Zwischenlage des Ringteils 35 der Dichtung 34 befestigt. Der Lautsprechermagnet 41 liegt mit geringem Abstand zum Boden 3 des Aufnahmekorbes 2 (Fig. 2).

Der Lautsprecherhalter wird durch Spritzgießen hergestellt. In einem Spritzwerkzeug mit wenigstens zwei Kavitäten wird in der einen Kavität zunächst der Aufnahmekorb 2 im ersten Spritzvorgang hergestellt. In die Kavität wird die harte Komponente aus Kunststoff eingespritzt. Nach Beendigung dieses ersten Spritzvorganges wird der Aufnahmekorb 2 bei geöffnetem Werkzeug mit einer Entnahmevorrichtung entnommen und in die seitlich daneben liegende Kavität eingesetzt. Sie unterscheidet sich von der ersten Kavität dadurch, daß ein um den Bereich der herzustellenden Dichtung 34 erweitertes Volumen vorgesehen ist, in welches in einem zweiten Spritzvorgang die weichere Komponente für die Dichtung 34 gespritzt wird. Während dieses zweiten Spritzvorgangs kann in der ersten Kavität die harte Komponente zur Herstellung des Aufnahmekorbes 2 des nächsten Lautsprecherhalters hergestellt werden. Somit ist während der gesamten, aufeinander abgestimmten Taktzeit das Spritzwerkzeug optimal ausgelastet. Selbstverständlich können auch Hinterschrieidungen durch Einsatz von Schiebern hergestellt werden.

Das Spritzgußwerkzeug kann auch mehr als zwei Kavitäten, beispielsweise vier Kavitäten aufweisen, um die Kapazität der Spritzgußmaschine zu erhöhen. In diesem Falle können gleichzeitig zwei Lautsprecherhalter in der beschriebenen Weise gefertigt werden.

Es ist schließlich auch möglich, in der Kavität zunächst den Aufnahmekorb 2 herzustellen und anschließend die Kavität zum Anspritzen der Dichtung 34 entsprechend zu vergrößern.

## Patentansprüche

1. Anordnung eines Halters (2 bis 7) für einen Lautsprecher (1) in einem Kraftfahrzeug, bestehend aus dem Halter (2 bis 7), einem kraftfahrzeugfesten Teil (11), einer Dichtung (34) und einer Seitenwand (38) eines Einbauraumes für den Lautsprecher (1), wobei der Halter (5 bis 7) eine Aufnahme (2) für den Lautsprecher (1) aufweist, die mit wenigstens einer Auflage (7) versehen ist, mit der die Aufnahme (2) auf dem kraftfahrzeugseitigen Teil (11) aufliegt und auf welcher Auflage (7) wenigstens ein Ringteil (35) der Dichtung (34) angeordnet ist, wobei der Halter (2 bis 7) aus einem harten Kunststoff in Form von Polycarbonat mit Glasfasern, Polypropylen, Polyacryl oder AcrylnitrilButadien-Styrol-Copolymere besteht,
**dadurch gekennzeichnet, dass** die Dichtung (34) mit einer an das Ringteil (35) anschließenden Dichtlippe (37) versehen ist, die unter elastischer Verformung an der Seitenwand (38) des Einbauraumes anliegt und den Einbauraum des Lautsprechers (1) abdichtet.

2. Anordnung nach Anspruch 1,
**dadurch gekennzeichnet, dass** die Aufnahme (2) korbförmig ausgebildet ist.

3. Anordnung nach Anspruch 1 oder 2,
**dadurch gekennzeichnet, dass** die Auflage (7) ein umlaufender, vorzugsweise radial abstehender Rand der Aufnahme (2) ist.

4. Anordnung nach einem der Ansprüche 1 bis 3,
**dadurch gekennzeichnet, dass** die Dichtung (34) als Dichtring ausgebildet ist, der über den Umfang der Aufnahme (2) verläuft.

5. Anordnung nach einem der Ansprüche 1 bis 4,
**dadurch gekennzeichnet, dass** die Dichtung (34) aus weichem Kunststoff besteht.

6. Anordnung nach einem der Ansprüche 1 bis 5,
**dadurch gekennzeichnet, dass** die Dichtlippe (37) radial über die Auflage (7) ragt.

7. Anordnung nach einem der Ansprüche 1 bis 6,
**dadurch gekennzeichnet, dass** die Dichtlippe (37) im Querschnitt teilkreisförmig ausgebildet ist.

## Claims

1. Arrangement of a support (2 to 7) for a loudspeaker (1) in a vehicle, composed of the support (2 to 7), a component (11) being part of the vehicle, a seal (34) and a side panel (38) of an installation space for the loudspeaker (1), the support (5 to 7) comprising a receiver (2) for the loudspeaker (1), provided with at least one rest (7), with which the receiver (2) lays on the component (11) vehicle-side and on which rest (7) is arranged at least one ring element (35) of the seal (34), the support (2 to 7) consisting of a hard plastic in terms of polycarbonate with optical fibres, polypropylene, polyacrylics or acrylonitrile-butadiene-styrol-copolymer,
**characterized in that** the seal (34) is provided with a sealing lip (37), adjoining the ring element (35), abutting under elastic deformation on the side panel (38) of the installation space and sealing the installation space of the loudspeaker (1).

2. Arrangement according to claim 1,
**characterized in that** the receiver (2) is formed in the shape of a basket.

3. Arrangement according to claim 1 or 2,
**characterized in that** the rest (7) is a surrounding border of the receiver (2), preferably protruding radially.

4. Arrangement according to one of the claims 1 to 3,
**characterized in that** the seal (34) is modelled as a sealing ring which proceeds over the perimeter of the receiver (2).

5. Arrangement according to one of the claims 1 to 4,
**characterized in that** the seal (34) consists of soft plastic.

6. Arrangement according to one of the claims 1 to 5,
**characterized in that** the sealing lip (37) projects radially over the rest (7).

7. Arrangement according to one of the claims 1 to 6,
**characterized in that** the cross-section of the sealing lip (37) is formed partially circular.

## Revendications

1. Dispositif d'un support (2 à 7) pour un haut-parleur (1) dans un véhicule, constitué du support (2 à 7), d'une pièce (11) solidaire au véhicule, d'un joint d'étanchéité (34) et d'un panneau latéral (38) d'un logement d'installation pour le haut-parleur (1), le support (5 à 7) présentant un logement (2) pour le haut-parleur (1), qui est muni d'au moins un appui (7), avec lequel le logement (2) repose sur la pièce (11) du côté du véhicule et sur lequel appui (7) est disposé au moins un élément annulaire (35) du joint d'étanchéité (34),
le support (2 à 7) étant en une matière plastique dure comme polycarbonate avec fibres de verre, polypropylène, polyacryle ou copolymère d'acrylonitrile-butadiène-styrène,
**caractérisé en ce que** le joint d'étanchéité (34) est muni d'une lèvre d'étanchéité (37) rattachée à l'élément annulaire (35), laquelle est ajustée sous déformation élastique sur le panneau latéral (38) du logement d'installation, et étanche le logement d'installation du haut-parleur (1).

2. Dispositif selon revendication 1, **caractérisé en ce que** le logement (2) est constitué en forme de panier.

3. Dispositif selon revendication 1 ou 2, **caractérisé en ce que** l'appui (7) est un bord périphérique du logement (2), de préférence faisant saillie radialement.

4. Dispositif selon une des revendications 1 à 3, **caractérisé en ce que** le joint d'étanchéité (34) est constitué en forme de bague d'étanchéité, laquelle se trouve sur la périphérie du logement (2).

5. Dispositif selon une des revendications 1 à 4, **caractérisé en ce que** le joint d'étanchéité (34) est en une matière plastique molle.

6. Dispositif selon une des revendications 1 à 5, **caractérisé en ce que** la lèvre d'étanchéité (37) fait saillie radialement sur l'appui (7).

7. Dispositif selon une des revendications 1 à 6, **caractérisé en ce que** la lèvre d'étanchéité (37) est constituée sous une forme partiellement circulaire en section transversale.
